Europäisches Patentamt

European Patent Office

Office européen des brevets

(19)

(11) Veröffentlichungsnummer: **0 233 975**
**B1**

(12)

# EUROPÄISCHE PATENTSCHRIFT

(45) Veröffentlichungstag der Patentschrift:
**18.10.89**

(21) Anmeldenummer: **86102574.0**

(22) Anmeldetag: **27.02.86**

(51) Int. Cl.⁴: **C09C 1/36**

(54) **Verfahren zur Verbesserung von Titandioxid-Pigmenten durch eine Nachbehandlung.**

(43) Veröffentlichungstag der Anmeldung:
**02.09.87 Patentblatt 87/36**

(45) Bekanntmachung des Hinweises auf die Patenterteilung:
**18.10.89 Patentblatt 89/42**

(84) Benannte Vertragsstaaten:
**BE DE FR GB IT NL**

(56) Entgegenhaltungen:
**EP-A- 0 008 101**
**FR-A- 1 583 161**
**US-A- 3 522 078**

(73) Patentinhaber: **KRONOS TITAN-Gesellschaft mbH,
Peschstrasse 5 Postfach 10 07 20,
D-5090 Leverkusen 1(DE)**

(72) Erfinder: **Luginsland, Hans-Hermann, Dr., Bruchhauser
Strasse 152, D-5090 Leverkusen 3(DE)**
Erfinder: **Rosendahl, Franz, Dr., Hegelstrasse 13,
D-5090 Leverkusen 1(DE)**

## Beschreibung

Die Erfindung betrifft ein Verfahren zur Verbesserung von Titandioxid-Pigmenten durch eine Nachbehandlung, wobei die Nachbehandlung so durchgeführt wird, daß das auf beliebige Weise hergestellte Titandioxid-Pigment in wässeriger Suspension mit einer wässerigen Titanoxidchloridlösung und gegebenenfalls mit einem oder mehreren anderen bei Neutralisation schwerlösliche Oxidhydrate und/oder sonstige schwerlösliche Verbindungen bildenden wasserlöslichen Metallsalzen und/oder gegebenenfalls einem wasserlöslichen Silicat in beliebiger Reihenfolge versetzt wird und aus der Titanoxidchloridlösung und gegebenenfalls den anderen Metallsalzen und/oder dem Silicat schwerlösliche Oxidhydrate und/oder sonstige schwerlösliche Verbindungen auf das Titandioxid-Pigment niedergeschlagen werden und das so behandelte Titandioxid-Pigment aus der Suspension abgetrennt, gewaschen, getrocknet und gemahlen wird.

Es ist bekannt, daß man durch eine solche Nachbehandlung Titandioxid-Pigmente in verschiedenen Eigenschaften, z.B. in ihrer Witterungsbeständigkeit und in ihren optischen Eigenschaften, verbessern kann.

Bei der Nachbehandlung werden oft Lösungen von Salzen des vierwertigen Titans eingesetzt. Dabei werden sehr häufig Titanylsulfatlösungen verwendet. Die Titanylsulfatlösungen haben aber den Nachteil, daß sie zur Instabilität neigen. Das äußert sich darin, daß häufig beim Stehen solcher Lösungen der Gehalt an gelöstem Titan abnimmt und sich Bodensätze bilden. Damit ist ein Verlust an wirksamer Substanz verbunden. Außerdem finden in der Lösung Veränderungen statt, die zu Schwankungen in den durch die Nachbehandlung zu verbessernden Eigenschaften des nachbehandelten Titandioxid-Pigmentes führen können. Ein weiterer Nachteil des Einsatzes von Titanylsulfatlösungen besteht darin, daß ihre Herstellung und damit ihr Einsatz nur dann wirtschaftlich vertretbar ist, wenn auf Zwischenprodukte der Titandioxid-Pigment-Herstellung durch Hydrolyse von Titanylsulfatlösungen nach dem sogenannten "Sulfatprozeß" zurückgegriffen werden kann.

Es ist auch vorgeschlagen worden, bei der Nachbehandlung andere Verbindungen des vierwertigen Titans, wie z. B. Chloride, einzusetzen (US-A-3 146 119). Diese Chloride des Titans werden in Form einer Lösung eingesetzt, die im weiteren als "Titanoxidchloridlösung" bezeichnet wird. Unter einer solchen "Titanoxidchloridlösung" soll hier nicht die Lösung der stöchiometrischen Verbindung $TiOCl_2$ verstanden werden, sondern eine wässerige, gelöstes Titan und Salzsäure enthaltende Lösung, die durch ihren Gehalt an $TiO_2$ und an HCl charakterisiert wird, wobei offenbleiben soll, welche der zahlreichen möglichen Hydrolyseprodukte des Titantetrachlorids in der Lösung tatsächlich vorliegen.

Diese Titanoxidchloridlösung wird gewöhnlich durch Lösen von Titantetrachlorid in Wasser oder verdünnten salzsäurehaltigen wässerigen Lösungen hergestellt. Diese Herstellung ist relativ kostspielig, da zur Herstellung des Titantetrachlorids im allgemeinen elementares Chlor verwendet werden muß, die Herstellung des Titantetrachlorids bei hohen Temperaturen vorgenommen wird und das Titantetrachlorid durch aufwendige Reinigungsschritte von Fremdmetallen, insbesondere Eisen, Aluminium, Vanadium, Chrom usw., befreit werden muß. Da vor allem die optischen Eigenschaften des Titandioxid-Pigments durch farbige Ionen bildende Fremdmetalle beeinflußt wird, war man bestrebt, für die Herstellung der Titanoxidchloridlösung von reinstem Titantetrachlorid auszugehen, wie es für die Herstellung von Titandioxid-Pigmenten durch Umsetzung mit Sauerstoff nach dem sogenannten "Chloridverfahren" verwendet wird.

Es wurde nach einem Verfahren gesucht, das diese hohen Kosten vermeidet. Dabei wurde ein neues Verfahren zur Verbesserung von Titandioxid-Pigmenten durch eine Nachbehandlung gefunden, wobei die Nachbehandlung so durchgeführt wird, daß das auf beliebige Weise hergestellte Titandioxid-Pigment in wässeriger Suspension mit einer wässerigen Titanoxidchloridlösung und gegebenenfalls mit einem oder mehreren anderen bei Neutralisation schwerlösliche Oxidhydrate und/oder sonstige schwerlösliche Verbindungen bildenden wasserlöslichen Metallsalzen und/oder gegebenenfalls einem wasserlöslichen Silicat in beliebiger Reihenfolge versetzt wird und aus der Titanoxidchloridlösung und gegebenenfalls den anderen Metallsalzen und/oder dem Silicat schwerlösliche Oxidhydrate und/oder sonstige schwerlösliche Verbindungen auf das Titandioxid-Pigment niedergeschlagen werden und das so behandelte Titandioxid-Pigment aus der Suspension abgetrennt, gewaschen, getrocknet und gemahlen wird. Das Verfahren ist dadurch gekennzeichnet, daß als wässerige Titanoxidchloridlösung eine Lösung mit einem Salzsäuregehalt, der einem Molverhältnis von HCl zu $TiO_2$ von 3,5 bis 10 entspricht, eingesetzt wird, die beim Waschen von Abgasen gebildet wird, die bei der Herstellung von Titantetrachlorid durch Chlorieren titanhaltiger Rohstoffe entstehen.

Bei diesem Verfahren wird eine Titanquelle genutzt, die andernfalls eine Umweltbelastung darstellen würde.

Als Folge verschärfter Bestimmungen zur Reinhaltung von Luft und Wasser und der Notwendigkeit, chemische Verfahren möglichst wirtschaftlich zu gestalten, ist man bestrebt, die Menge der anfallenden industriellen Abfälle zu verringern und verwertbare Abfallstoffe möglichst weitgehend als Sekundärrohstoffe in den Produktionskreislauf zurückzuführen.

Bei der Herstellung von Titandioxid setzt sich das Verfahren der Oxidation von Titantetrachlorid in der Dampfphase ("Chlorid-Prozeß"), bei dem nur feste und gasförmige Reaktionsprodukte entstehen, zunehmend gegen solche Verfahren durch, bei denen titanhaltige Rohstoffe mit Säuren aufgeschlossen werden, wobei erhebliche Mengen an Abfallsäuren entstehen, deren Verbringung und Beseitigung oder Aufarbeitung schwierig und kostspielig ist.

Titantetrachlorid ist somit ein wichtiger Ausgangsrohstoff für die Titandioxidherstellung und wird daher in großen Mengen hergestellt.

Das Titantetrachlorid wird hergestellt durch Chlorierung titanhaltiger Rohstoffe in Gegenwart einer kohlenstoffhaltigen Verbindung. Geeignete titanhaltige Rohstoffe sind natürliche und künstliche Rutile, titanhaltige Schlacken oder titanhaltige Erze, z. B. Ilmenit. Geeignete kohlenstoffhaltige Verbindungen sind Anthrazit und Koks, z. B. Petrolkoks.

Die Rohstoffe werden in feinteiliger Form bei hohen Temperaturen chloriert. Dabei werden die in ihnen enthaltenen Metalloxide praktisch vollständig in die entsprechenden Metallchloride umgewandelt, die die Umsetzungszone in Form eines im wesentlichen gasförmigen Reaktionsgemisches (auch "Chloridgemisch" genannt) verlassen. Danach werden die verschiedenen Metallchloride in einer oder mehreren Stufen aus dem Chloridgemisch abgeschieden; das abgeschiedene Titantetrachlorid wird dann von den es begleitenden übrigen Metallchloriden abgetrennt und gereinigt.

Um das leichtflüchtige Titantetrachlorid in ausreichendem Maße aus dem Chloridgemisch zu gewinnen, wird dieses Chloridgemisch auf möglichst tiefe Temperaturen, z. B. bis auf etwa -20 °C abgekühlt.

Bei der Abtrennung der Hauptmenge der Metallchloride und in den folgenden Stellen des Titantetrachlorid-Herstellungsprozesses entstehen Abgase, die weiter unten auch als "Chlorierungsabgase" bezeichnet werden. Diese Abgase enthalten neben Kohlendioxid, Kohlenmonoxid und gegebenenfalls Stickstoff noch Chlorwasserstoff und kleine Mengen der Chloride von Titan, Silicium, Aluminium, Eisen, Vanadium und anderer Elemente. Diese Abgase dürfen nicht ohne weitere Reinigungsmaßnahmen in die Atmosphäre abgelassen werden; sie werden deshalb einem Waschprozeß unterworfen. Je nachdem, wie dieser Waschprozeß durchgeführt wird, wird eine Lösung mit einem niedrigeren oder höheren $TiO_2$-Gehalt und mit einem verschieden hohen Molverhältnis von HCl zu $TiO_2$ erhalten. Um eine solche Lösung und insbesondere den in ihr befindlichen Titangehalt sinnvoll verwerten zu können, muß der Waschprozeß so geführt werden, daß der $TiO_2$-Gehalt in der anfallenden Lösung möglichst hoch ist. Gleichzeitig muß man dafür sorgen, daß das Molverhältnis zwischen HCl und $TiO_2$ in der anfallenden Lösung nicht zu hoch ist. Ein geeigneter Waschprozeß ist in der DE-A-33 28 675 beschrieben.

Es wurde gefunden, daß Titanoxidchloridlösungen, die man durch Waschen von Abgasen aus der Titantetrachloridherstellung erhält und die einen Salzsäuregehalt aufweisen, der einem Molverhältnis von HCl zu $TiO_2$ von 3,5 bis 10 entspricht, zum Nachbehandeln von anorganischen Pigmenten geeignet sind. Der angegebene Bereich für das Molverhältnis von HCl zu $TiO_2$ ist für die technisch wirksame Durchführung des Verfahrens von wesentlicher Bedeutung. Bei Molverhältnissen unter 3,5 neigt die Titanoxidchloridlösung zur Instabilität. Molverhältnisse oberhalb 10 sind ebenfalls von Nachteil, weil dann mit der Titanoxidchloridlösung zu große Säuremengen in das Nachbehandlungssystem eingebracht werden, die den Einsatz entsprechend großer Mengen alkalisch reagierender Substanzen erforderlich machen. Abgesehen von den damit verbundenen erhöhten Kosten stellen die erhaltenen Pigmentsuspensionen wegen der anwesenden großen Mengen an wasserlöslichen Salzen wiederum eine Umweltbelastung dar.

Der $TiO_2$-Gehalt der Titanoxidchloridlösung ist nicht kritisch. Nach oben wird er nur dadurch begrenzt, daß durch Waschen der Chlorierungsabgase auf wirtschaftliche Weise nicht beliebig hohe $TiO_2$-Gehalte erreicht werden. Titanoxidchloridlösungen mit einem $TiO_2$-Gehalt von beispielsweise bis zu 170 g/l sind aber ohne weiteres herstellbar und hervorragend für das vorliegende Verfahren geeignet.

Nach unten ist der $TiO_2$-Gehalt prinzipiell nicht begrenzt. Im allgemeinen wird man, um nicht zu große Flüssigkeitsmengen einzusetzen, mit dem $TiO_2$-Gehalt nicht wesentlich unter 50 g/l heruntergehen. Gegebenenfalls kann die beim Waschen der Chlorierungsabgase erhaltene Titanoxidchloridlösung vor ihrem Einsatz mit Wasser verdünnt werden, wobei natürlich das Molverhältnis HCl zu $TiO_2$ erhalten bleibt.

Im allgemeinen sind Titanoxidchloridlösungen mit einem $TiO_2$-Gehalt von 100 bis 170 g/l besonders günstig.

Da beim Waschprozeß außer dem Titantetrachlorid auch die Chloride der anderen Metalle, die sich in den Chlorierungsabgasen befinden, mit ausgewaschen werden, weisen die erhaltenen Titanoxidchloridlösungen auch einen Gehalt an färbenden Kationen auf. Die Menge dieser Kationen hängt von der Zusammensetzung der Chlorierungsabgase ab. Zwei typische Beispiele für solche Titanoxidchloridlösungen sind in der Tabelle 1 aufgeführt.

Tabelle 1

| Bestandteil in g/l | Titanoxidchlorid-lösung A | Titanoxidchlorid-lösung B |
|---|---|---|
| HCl | 418 | 422 |
| TiO$_2$ | 137 | 130 |
| SiO$_2$ | 1,2 | 1,4 |
| Fe | 0,9 | 0,56 |
| V | 0,25 | 0,23 |
| Mn | 0,095 | 0,085 |
| Al | 0,084 | 0,095 |
| Cr | 0,019 | 0,013 |
| Molverhältnis HCl zu TiO$_2$ | 6,7 | 7,1 |

Infolge ihres Gehaltes an färbenden Kationen kamen diese Titanoxidchloridlösungen bisher nur für den Einsatz bei der Nachbehandlung anorganischer Buntpigmente in Frage, da bei diesen Buntpigmenten der färbende Anteil dieser Kationen nicht ins Gewicht fällt. Auf keinen Fall wurde angenommen, daß diese Titanoxidchloridlösungen ohne weiteres bei der Nachbehandlung von Titandioxid-Pigmenten eingesetzt werden konnten, ohne daß die färbenden Kationen vorher entfernt werden oder daß bei der Nachbehandlung dafür Sorge getragen wird, daß die färbenden Kationen nicht mit ausgefällt werden. Eine Entfernung der färbenden Kationen ist äußerst kostspielig und wirtschaftlich nicht gerechtfertigt. Maßnahmen zur Verhinderung der Ausfällung der färbenden Kationen bei der Nachbehandlung erfordern andererseits entweder die Zugabe weiterer Substanzen, die zu einer Verschlechterung der Pigmente oder zu kostspieligen weiteren Schritten führen, oder die Einhaltung von Bedingungen bei der Nachbehandlung, die ebenfalls nicht zu optimalen Pigmenten führen.

Es wurde nun überraschenderweise gefunden, daß eine solche Titanoxidchloridlösung auch für die Nachbehandlung von Titandioxid-Pigmenten in hervorragender Weise geeignet ist, und zwar auch dann, wenn man die färbenden Kationen nicht enfernt und/oder ihre Mitfällung nicht verhindert.

Die Erfindung betrifft somit auch ein Verfahren zu Verwendung einer wässerigen Titanoxidchloridlösung mit einem Salzsäuregehalt, der einem Molverhältnis von HCl zu TiO$_2$ von 3,5 bis 10 entspricht, die beim Waschen von Abgasen gebildet wird, die bei der Herstellung von Titantetrachlorid durch Chlorieren titanhaltiger Rohstoffe entstehen, wobei dieses Verfahren dadurch gekennzeichnet ist, daß die beim Waschen der Abgase gebildete Lösung ohne Entfernung der in ihr befindlichen Nichttitanmetallionen bei der Nachbehandlung von Titandioxid-Pigmenten eingesetzt wird.

Es wurde nicht nur gefunden, daß man durch Einsatz dieser Titanoxidchloridlösung zu Titandioxid-Pigmenten gelangt, die Titandioxid-Pigmenten, bei deren Nachbehandlung andere Titanlösungen eingesetzt werden, praktisch gleichwertig sind, sondern daß man sogar unter gewissen Bedingungen zu noch besseren Titandioxid-Pigmenten gelangen kann.

Das erfindungsgemäße Verfahren ist nicht nur billig, sondern hat auch den großen Vorteil, daß es zur Entlastung der Umwelt beiträgt.

Der erfindungsgemäßen Nachbehandlung können auf beliebige Weise hergestellte Titandioxid-Pigmente unterworfen werden, die sowohl Anatas- als auch Rutilstuktur aufweisen können. Sie können beispielsweise durch Hydrolyse aus Titanylsulfat- oder Titanoxidchloridlösungen hergestellt und anschließend geglüht werden. Besonders vorteilhaft ist das erfindungsgemäße Verfahren, wenn als Titandioxid-Pigment ein Pigment eingesetzt wird, daß durch Oxidation von Titantetrachlorid in der Dampfphase hergestellt wird. In diesem Falle wird die für die Nachbehandlung benötigte Titanoxidchloridlösung direkt bei der Herstellung des für die Titandioxid-Pigmentherstellung eingesetzten Titantetrachlorids im Rahmen des Gesamtprozesses aus den Chlorierungsabgasen gewonnen.

Die vorliegende Erfindung beinhaltet eine einzigartige Möglichkeit, durch eine bestimmte Kombination von Verfahrensschritten die im Rahmen des Gesamtprozesses der Herstellung von Titandioxid-Pigmenten über das Titantetrachlorid entstehenden Chlorierungsabgase im Hinblick auf die in ihnen enthaltenen Titanmengen im Rahmen dieses Prozesses nutzbringend zu verwerten. Es wurde somit auch ein Verfahren zur Herstellung eines verbesserten Titandioxid-Pigmentes aus einem titanhaltigen Rohstoff gefunden. Dieses Verfahren ist durch folgende Stufen gekennzeichnet:

a) Chlorieren des titanhaltigen Rohstoffes in Anwesenheit eines Reduktionsmittels unter Bildung eines Metallchloride enthaltenden Reaktionsgemisches,

b) Abscheiden der Metallchloride aus dem Reaktionsgemisch und Abtrennen und Reinigen des Titantetrachlorids von den übrigen Metallchloriden, wobei Abgase entstehen,

c) Umsetzen des gereinigten Titantetrachlorids im Dampfzustand bei erhöhter Temperatur mit Sauerstoff unter Bildung von Titandioxid-Pigment und Chlor,

d) Abtrennen des Titandioxid-Pigmentes von den chlorhaltigen Gasen,

e) Zurückführen der chlorhaltigen Gase, gegebenenfalls nach einer geeigneten Aufarbeitung, in die Stufe a),

f) Nachbehandeln des Titandioxid-Pigmentes, wobei es in wässeriger Suspension mit einem oder mehreren wasserlöslichen Metallsalzen, die bei Neutralisation schwerlösliche Oxidhydrate und/oder sonstige schwerlösliche Verbindungen bilden, und gegebenenfalls einem wasserlöslichen Silicat versetzt wird und aus diesem Metallsalz bzw. diesen Metallsalzen und gegebenenfalls dem Silicat schwerlösliche Oxidhydrate und/oder sonstige schwerlösliche Verbindungen auf das Titandioxid-Pigment niedergeschlagen werden und das so behandelte Titandioxid-Pigment aus der Suspension abgetrennt, gewaschen, getrocknet und gemahlen wird,

g) Waschen der in Stufe b) erhaltenen Abgase unter Bildung einer wässerigen Titanoxidchloridlösung mit einem Salzsäuregehalt, der einem Molverhältnis von HCl zu $TiO_2$ von 3,5 bis 10 entspricht, und

h) Einsetzen dieser Titanoxidchloridlösung ohne Abtrennung der aus den Abgasen mit ausgewaschenen weiteren Metallsalze bei der Nachbehandlung des Titandioxid-Pigmentes in Stufe f).

Die Titanoxidchloridlösung kann in üblichen Mengen eingesetzt werden. Bevorzugt wird sie in einer Menge von 0,2 bis 2 Gewichtsprozent, vorzugsweise 0,2 bis 1 Gewichtsprozent, berechnet als $TiO_2$ und bezogen auf eingesetztes Titandioxid-Pigment, eingesetzt. In diesem Bereich wird im allgemeinen bereits eine gute Verbesserung des Titandioxid-Pigments erreicht, andererseits macht sich hier die Anwesenheit der mit der Titanoxidchloridlösung eingeführten farbigen Metallionen im allgemeinen noch nicht störend bemerkbar.

Es kann so verfahren werden, daß bei der Nachbehandlung des Titandioxid-Pigmentes lediglich die Titanoxidchloridlösung eingesetzt wird und durch Zugabe einer alkalisch reagierenden Substanz wasserhaltiges Titandioxidhydrat auf das Titandioxid-Pigment ausgefällt wird. Bevorzugt werden außer der Titanoxidchloridlösung auch andere Metallsalze eingesetzt. Dabei werden insbesondere Lösungen solcher Metallsalze eingesetzt, die nichtgefärbte Oxidhydrate bilden; der Einsatz anderer Metallsalze soll aber nicht ausgeschlossen werden, wenn er für spezielle Zwecke erforderlich sein sollte. Es ist ferner auch möglich, bei der Nachbehandlung andere Stoffe zuzusetzen, um wasserhaltige nicht gefärbte und schwerlösliche sonstige Verbindungen auszufällen, wie z. B. Phosphat und/oder Silicat. Nach einer besonders bevorzugten Ausführungsform der Erfindung wird die wässerige Titandioxid-Pigment-Suspension außer mit der Titanoxidchloridlösung auch mit wässerigen Lösungen von Salzen des Aluminiums und/oder des Zirkoniums und/oder mit einer wässerigen Silicatlösung versetzt.

Im einzelnen wird die Nachbehandlung in der Regel so durchgeführt, daß das Titandioxid-Pigment in wässeriger Suspension mit der Titanoxidchloridlösung und gegebenenfalls den anderen wasserlöslichen Metallsalzen und/oder gegebenenfalls dem wasserlöslichen Silicat versetzt wird. Dem Gemisch werden gegebenenfalls bei saurer Reaktion der Suspension eine alkalisch reagierende Substanz bzw. ein alkalisch reagierendes Substanzgemisch bis zur mindestens neutralen Reaktion, bei alkalischer Reaktion der Suspension dagegen eine sauer reagierende Substanz bzw. ein sauer reagierendes Substanzgemisch bis zur mindestens neutralen Reaktion zugesetzt. Das so behandelte Titandioxid-Pigment wird aus der Suspension abgetrennt, gewaschen, getrocknet und gemahlen.

Die Zugabe der einzelnen Nachbehandlungssubstanzen kann in beliebiger Reihenfolge und auf beliebige Weise erfolgen. So können die verschiedenen Nachbehandlungssubstanzen einzeln in getrennten Lösungen zugegeben werden. Es ist auch oft zweckmäßig, mehrere Metallsalze gemeinsam in einer Lösung zuzugeben. So kann beispielsweise die Titanoxidchloridlösung vor ihrem Einsatz mit einer sauren Aluminiumsalz- und/oder einer sauren Zirkoniumsalzlösung vermischt werden. Abgesehen davon, daß auf diese Weise bei der Nachbehandlung mit weniger Lösungen gearbeitet wird, werden unter Umständen besonders gute Ergebnisse erzielt. Es ist mitunter zweckmäßig, die Titanoxidchloridlösung zum Schluß zuzugeben. Diese Verfahrensweise ist dann günstig, wenn die Titandioxid-Pigment-Suspension nach dur Zugabe der anderen Nachbehandlungssubstanzen alkalisch ist; der Salzsäuregehalt der Titanoxidchloridlösung dient dann zur Neutralisation der Suspension. Es können auch mehrere Nachbehandlungssubstanzen gleichzeitig und getrennt derart zugegeben werden, daß während ihrer Zugabe die Suspension in einem bestimmten pH-Bereich verbleibt.

So kann beispielsweise die Nachbehandlung derart durchgeführt werden, daß zu der wässerigen Titandioxid-Pigment-Suspension eine Titanoxidchloridlösung im Gemisch mit einer sauer reagierenden Aluminiumsalzlösung und gleichzeitig getrennt davon eine alkalisch reagierende Lösung von Natriumhydroxid und/oder Natriumaluminat derart zugegeben werden, daß in der Suspension während der Zugabe dieser Lösungen ein pH-Wert von 3,5 bis 8, insbesondere 4 bis 6 eingehalten wird, die Suspension anschließend gegebenenfalls neutralisiert und das Pigment dann aus der Suspension abgetrennt, gewaschen, getrocknet und gemahlen wird.

Diese Verfahrensweise führt überraschenderweise zu einer besonders starken Verbesserung der Witterungsbeständigkeit, die die Witterungsbeständigkeit, die durch den entsprechenden Einsatz einer reinen wässerigen Titanoxidchloridlösung erzielt wird, beträchtlich übersteigt. Man kann hier andererseits die Zusatzmenge an Titanoxidchloridlösung reduzieren, wenn man zu gleichen Ergebnissen wie bei den bekannten Verfahren kommen will.

Durch den erfindungsgemäßen Einsatz der durch Waschen von Chlorierungsabgasen gewonnenen Titanoxidchloridlösung kann auch der Glanz des Titandioxid-Pigments in erheblichem Maße verbessert werden.

Gegebenenfalls kann man die Nachbehandlung des Titandioxid-Pigmentes mehrfach durchführen, wobei man das Titandioxid-Pigment zwischen den einzelnen Nachbehandlungen in derselben Suspension belassen oder aus der Suspension abtrennen und erneut aufschlämmen kann.

Nach einer geeigneten Verfahrensweise wird eine wässerige Titanoxidchloridlösung eingesetzt, die dadurch hergestellt wird, daß die Abgase, die bei der Herstellung von Titantetrachlorid durch Chlorieren titanhaltiger Rohstoffe entstehen, mit einer wässerigen Titanoxidchloridlösung behandelt werden, deren Konzentration, berechnet als $TiO_2$, 100 bis 170 g/l beträgt.

Diese Arbeitsweise ist in der DE-A- 33 28 675 beschrieben.

Das vorliegende Verfahren ist aber nicht auf diese Herstellungsweise für die Titanoxidchloridlösung beschränkt, sondern unfaßt alle Verfahrensweisen, mit denen es gelingt, durch Waschen der Abgase, die bei der Herstellung von Titantetrachlorid durch Chlorieren von titanhaltigen Rohstoffen entstehen, eine Titanoxidchloridlösung mit einem Salzsäuregehalt, der einem Molverhältnis von HCl zu $TiO_2$ von 3,5 bis 10 entspricht, herzustellen.

In den nachfolgenden Beispielen wird die Erfindung näher erläutert.

Für die Beurteilung der in diesen Beispielen erhaltenen Pigmente wurden folgende Teste verwendet:

aa) Witterungsbeständigkeit

Hierfür wurden die Pigmente in Lacke eingearbeitet und deren Kreidung in Abhängigkeit von der Bewitterungsdauer gemessen. Dabei wurde im einzelnen folgendermaßen verfahren:

Zur Herstellung einer Paste wurden 75 g Titandioxid-Pigment und 50 g eines mittelöligen fettsäuremodifizierten Alkydharzes zweimal über einen Dreiwalzenstuhl gegeben. 75 g dieser Paste wurden mit weiteren 94 g des Harzes und 24,7 g einer Lösung vermischt, die aus 160 Teilen Testbenzin, 40 Teilen Ethylglykolacetat und 24 Teilen Ethylglykol bestand und der in üblicher Weise Siccative und geringe Mengen eines Siliconöls und eines Hautverhinderungsmittels zugesetzt worden waren. Das Gemisch wurde auf eine Stahlplatte aufgetragen, eine Stunde vorgetrocknet und eine Stunde bei 90 °C eingebrannt.

Die Anstriche wurden in einem Bewitterungsgerät mit Kohlenbogen in zwanzigminütigen Zyklen bewittert, wobei innerhalb jedes Zyklus die Proben 17 Minuten bestrahlt und 3 Minuten mit Wasser besprüht wurden. Die Messung der Kreidung erfolgte nach DIN 53159. Als Meßwert für die Kreidungsbeständigkeit diente die Anzahl Tage, bis visuell ein Beginn der Kreidung festgestellt wurde.

bb) Helligkeit und Farbstick

Die Testung erfolgte nach DIN 55983 "Vergleich der Farbe von Weißpigmenten in Purton-Systemen". Die Bestimmung der Helligkeit L und des Farbstichs b wurde mit dem Hunter LAB-Fotometer gemessen. Die Messung erfolgte im lufttrocknenden System.

cc) Glanz in Dispersionslackfarben

Es wurden Dipersionslackfarben nach der Richtrezeptur der ROHM AND HAAS DEUTSCHLAND GMBH, Frankfurt/Main 1, "HOCHGLANZFARBE FÜR AUSSEN AUF BASIS PRIMAL AC-507 (Formulierung ERM-014-184)" hergestellt. Die erhaltenen Dispersionlackfarben wurden nach dreitägiger Lagerung in 100 μm Naßschichtdicke auf Morestkarten aufgezogen. Die getrockneten Filme wurden nach drei Tagen mit einem Glanzmesser unter Winkeln von 20° und 60° gemessen (Reflektionswerte).

dd) Glanz in Alkydharz

Das Pigment wurde in einem Alkydharz mit einer Pigmentvolumenkonzentration von 20 % angepastet, in einer Schicht auf einer Glasplatte aufgetragen und an der Luft getrocknet. Die Messung des Glanzes erfolgte an dieser Filmschicht unter einem Winkel von 20° mit einem Glanzmesser (Reflektionswerte).

ee) Gehalt an Fremdmetallen

Die Bestimmung erfolgte spektralanalytisch.

Die folgenden Beispiele 1a bis 1f sollen die Überlegenheit der erfindungsgemäß nachbehandelten Titandioxid-Pigmente gegenüber sölchen Titandioxid-Pigmenten zeigen, die in bekannter Weise unter Verwendung einer Titanylsulfatlösung oder einer aus reinem Titantetrachlorid hergestellten Titanoxidchloridlösung nachbehandelt wurden.

### Beispiel 1a

Es wurde von 5 kg eines durch Oxidation von Titantetrachlorid in der Dampfphase hergestellten Titandioxid-Pigmentes ausgegangen. Dieses Titandioxid-Pigment wurde in Form einer wässerigen Suspension mit einem $TiO_2$-Gehalt von 350 g/l eingesetzt, in der durch Zugabe von NaOH und einer geringen Menge eines Polyphosphates ein pH-Wert von 10 eingestellt war. Die erhaltene Suspension wurde auf 60 °C erwärmt. Unter ständigem Rühren und Einhalten der Temperatur wurden nacheinander folgende Zusätze gemacht:

1. 385 ml der in Tabelle 1 aufgeführten Titanoxidchloridlösung B, entsprechend 1 % $TiO_2$, bezogen auf eingesetztes Pigment; nach dem Zusatz wurde 10 Minuten gerührt;

2. 1070 ml einer 10 %igen NaOH-Lösung, gefolgt von 10 Minuten Rühren. Der pH-Wert der Suspension betrug danach 7,3;

3. 575 ml einer Natriumaluminatlösung mit einem $Al_2O_3$-Gehalt von 165 g/l und einem NaOH-Gehalt von etwa 250 g/l, entsprechend 1,9 % $Al_2O_3$, bezogen auf eingesetztes Pigment; danach wurde 10 Minuten gerührt;

4. 550 ml einer Aluminiumsulfatlösung mit einem $Al_2O_3$-Gehalt von 100 g/l und einem $H_2SO_4$-Gehalt von etwa 280 g/l, entsprechend 1,1 % $Al_2O_3$, bezogen auf eingesetztes Pigment.

Die Suspension wurde anschließend 30 Minuten gerührt und wies dann einen pH-Wert von etwa 7,0 auf. Sie wurde filtriert und der Filterkuchen mit entsalztem Wasser gewaschen, getrocknet und mit einer Dampfstrahlmühle gemahlen.

### Beispiel 1b

Es wurde wie in Beispiel 1a gearbeitet mit dem Unterschied, daß die Zugabe der Titanoxidchloridlösung und der NaOH-Lösung gleichzeitig innerhalb von 20 Minuten in der Weise vorgenommen wurde, daß der pH-Wert der Suspension zwischen 6 und 8 gehalten wurde.

### Beispiel 1c

Es wurde wie in Beispiel 1a gearbeitet, jedoch wurde statt der durch Waschen von Chlorierungsabgasen gewonnenen Titanoxidchloridlösung eine solche verwendet, die durch Lösen von reinem Titantetrachlorid in Wasser bis zu einem $TiO_2$-Gehalt von 100 g/l erhalten wurde. Von dieser Lösung wurden 500 ml, entsprechend 1 % $TiO_2$, bezogen auf eingesetztes Pigment, verwendet.

### Beispiel 1d

Es wurde wie in Beispiel 1b, jedoch unter Verwendung der in Beispiel 1c beschriebenen Titanoxidchloridlösung gearbeitet.

### Beispiel 1e

Es wurde wie in Beispiel 1a gearbeitet. Anstatt der dort verwendeten Titanoxidchloridlösung wurde jedoch eine Titanylsulfatlösung mit einem $TiO_2$-Gehalt von 100 g/l und einem Gehalt an freier $H_2SO_4$ von etwa 150 g/l in einer Menge entsprechend 1 % $TiO_2$, bezogen auf eingesetztes Pigment, verwendet.

### Beispiel 1f

Es wurde wie in Beispiel 1b, jedoch unter Verwendung der Titanylsulfatlösung aus Beispiel 1e, gearbeitet.

Die erhaltenen Titandioxid-Pigmente wurden hinsichtlich ihrer Witterungsbeständigkeit mit dem unter aa) beschriebenen Test geprüft. Die Ergebnisse sind in der Tabelle 2 niedergelegt:

Tabelle 2

| Beispiel | 1a | 1b | 1c | 1d | 1e | 1f |
|---|---|---|---|---|---|---|
| verwendete Ti-Lösung[x) | TIW | TIW | TIC | TIC | TIS | TIS |
| Art der Zugabe der Ti-Lösung: | | | | | | |
| vor NaOH | X | | X | | X | |
| gleichzeitig mit NaOH | | X | | X | | X |
| Tage bis Kreidungsbeginn | 21 | 22 | 19 | 20 | 19 | 20 |

[x) TIW = Titanoxidchloridlösung, gewonnen durch Waschen von Chlorierungsabgasen
TIC = Titanoxidchloridlösung, gewonnen durch Lösen von reinem Titantetrachlorid in Wasser
TIS = Titanylsulfatlösung

Aus Tabelle 2 kann man entnehmen, daß die erfindungsgemäß nachbehandelten Titandioxid-Pigmente (Beispiele 1a und 1b) den in bekannter Weise mit Titanoxidchloridlösung (Beispiele 1c und 1d) oder Titanylsulfatlösung (Beispiele 1e und 1f) nachbehandelten Titandioxid-Pigmenten in ihrer Witterungsbeständigkeit überlegen sind. Diese Überlegenheit der erfindungsgemäß nachbehandelten Titandioxid-Pigmente ist unabhängig davon, ob die Ti-Lösung zuerst zugegeben wird, gefolgt von der Zugabe der NaOH-Lösung (Beispiel 1a im Vergleich zu den Beispielen 1c und 1e), oder ob beide Substanzen gleichzeitig unter Einhalten eines bestimmten pH-Bereiches in der Suspension zugegeben werden (Beispiel 1b im Vergleich zu den Beispielen 1d und 1f).

Die folgenden Beispiele 2a bis 2d zeigen, daß der erfindungsgemäß für die Nachbehandlung des Pigmentes erfolgte Einsatz der durch Waschen von Chlorierungsabgasen gewonnenen Titanoxidchloridlösung durch ihren Gehalt an Schwermetallen praktisch nicht beeinträchtigt wird:

Beispiel 2a

Es wurde von einer Suspension ausgegangen, die 5 kg eines durch Oxidation von Titantetrachlorid in der Dampfphase hergestellten Titandioxid-Pigmentes enthielt. Der $TiO_2$-Gehalt in der Suspension betrug 350 g/l. In ihr wurde ebenso wie in Beispiel 1a ein pH-Wert von 10 eingestellt. Die Suspension wurde auf 60 °C erwärmt, und es wurden dann unter ständigem Rühren und Einhalten der Temperatur nacheinander folgende Zusätze gemacht:

1. 500 ml Titanylsulfatlösung mit einem $TiO_2$-Gehalt von 100 g/l und einem Gehalt an freier $H_2SO_4$ von etwa 150 g/l, entsprechend 1,0 % $TiO_2$, bezogen auf eingesetztes Pigment; danach wurde 10 Minuten gerührt;
2. 660 ml der in Beispiel 1a verwendeten Natriumaluminatlösung, entsprechend 2,2 % $Al_2O_3$, bezogen auf eingesetztes Pigment; es folgte 10 Minuten Rühren;
3. 400 ml der in Beispiel 1a verwendeten Aluminiumsulfatlösung, entsprechend 0,8 % $Al_2O_3$, bezogen auf eingesetztes Pigment.

Die Suspension wurde weiter aufgearbeitet wie in Beispiel 1a beschrieben.

Beispiel 2b

Es wurde wie in Beispiel 2a gearbeitet, nur wurde anstatt der Titanylsulfatlösung eine durch Lösen von reinem Titantetrachlorid in Wasser hergestellte Titanoxidchloridlösung wie in Beispiel 1c verwendet, wobei deren Menge 250 ml, entsprechend 0,5 % $TiO_2$, bezogen auf eingesetztes Pigment, betrug.

Beispiel 2c

Zu der wie in Beispiel 2a hergestellten Suspension wurden nacheinander folgende Zusätze gemacht:

1. 285 ml der in Tabelle 1 aufgeführten Titanoxidchloridlösung A, entsprechend 0,8 % $TiO_2$, bezogen auf eingesetztes Pigment; es folgte 10 Minuten Rühren;
2. 765 ml der in Beispiel 2a verwendeten Natriumaluminatlösung, entsprechend 2,55 % $Al_2O_3$, bezogen auf eingesetztes Pigment; danach wurde 10 Minuten gerührt;
3. 225 ml der in Beispiel 2a verwendeten Aluminiumsulfatlösung, entsprechend 0,45 % $Al_2O_3$, bezogen auf eingesetztes Pigment.

Die Suspension wurde weiter aufgearbeitet, wie in Beispiel 2a beschrieben.

<u>Beispiel 2d</u>

Es wurde mit den gleichen Lösungen wie in Beispiel 2c gearbeitet, wobei sie auch in gleichen Mengen eingesetzt wurden. Im Unterschied zu Beispiel 2c wurden aber die Titanoxidchloridlösung und die Aluminiumsulfatlösung vor ihrer Zugabe miteinander vermischt. Im einzelnen wurde folgendermaßen verfahren:
Zu der wie in Beispiel 2a hergestellten Suspension wurde zunächst soviel der Aluminiumsulfat-Titanoxidchlorid-Mischlösung zugegeben, daß der pH-Wert der Suspension auf 4 bis 4,5 abgesenkt wurde. Danach wurde die Hauptmenge dieser Mischlösung gleichzeitig mit soviel Natriumaluminatlösung innerhalb 30 Minuten zugegeben, daß der pH-Bereich in der Suspension auf 4 bis 4,5 gehalten wurde. Anschließend wurde der Rest der Natriumaluminatlösung zugegeben und so in der Suspension ein neutraler pH-Wert eingestellt. Die Suspension wurde dann wie in Beispiel 2a weiter aufgearbeitet.

Die erhaltenen Titandioxid-Pigmente wurden hinsichtlich ihrer Witterungsbeständigkeit mit dem unter aa) beschriebenen Test geprüft. Ferner wurden Helligkeit L und Farbstich b (Test bb) sowie die Gehalte an Eisen, Vanadium und Chrom (Test ee) bestimmt. Die Ergebnisse sind in Tabelle 3 aufgezeichnet:

Tabelle 3

| Beispiel | 2a | 2b | 2c | 2d |
|---|---|---|---|---|
| Verwendete Ti-Lösung | TIS | TIC | TIW | TIW |
| Zugabe von | | | | |
| Ti und Al getrennt | X | X | X | |
| vermischt | | | | X |
| Tage bis Kreidungsbeginn | 13 | 13 | 14 | 16 |
| Helligkeit L | 97,9 | 97,9 | 97,7 | 97,8 |
| Farbstich b | 1,4 | 1,4 | 1,6 | 1,5 |
| Fremdmetallgehalt ppm Fe | 31 | 29 | 66 | 62 |
| V | <3 | <3 | 15 | 14 |
| Cr | 3,9 | 3,6 | 5,0 | 5,1 |

[x)] Erläuterung sieh unter Tabelle 2

Da die visuelle Erkennbarkeitsgrenze für Unterschiede in L und b bei 0,3 Einheiten liegt, sind, wie die Tabelle 3 zeigt, trotz des erhöhten Fremdmetallgehaltes bei den erfindungsgemäß nachbehandelten Pigmenten visuell keine Unterschiede in den optischen Eigenschaften zwischen diesen Pigmenten und den nach den bekannten Verfahren hergestellten Pigmenten festzustellen. Andererseits ist die Witterungsbeständigkeit der erfindungsgemäß nachbehandelten Pigmente deutlich verbessert. Diese Verbesserung ist besonders stark bei dem in Beispiel 2d hergestellten Titandioxid-Pigment.
In den folgenden Beispielen erfolgt eine kombinierte Nachbehandlung mit $TiO_2$, $ZrO_2$, $SiO_2$ und $Al_2O_3$.

<u>Beispiel 3a</u>

Es wurde von einer Suspension ausgegangen, die 5 kg eines durch Oxidation von Titantetrachlorid in der Dampfphase hergestellten Titandioxid-Pigmentes enthielt und einen $TiO_2$-Gehalt von 350 g/l und einen pH-Wert von 10 aufwies. Diese Suspension wurde wie in Beispiel 1a weiterbehandelt, wobei nacheinander folgende Zusätze gemacht wurden:

1. 250 ml einer Lösung von Zirkoniumorthosulfat mit einem $ZrO_2$-Gehalt von 100 g/l, entsprechend 0,5 % $ZrO_2$, bezogen auf eingesetztes Pigment; danach wurde 10 Minuten gerührt;
2. 500 ml der in Beispiel 1e verwendeten Titanylsulfatlösung mit einem $TiO_2$-Gehalt von 100 g/l, entsprechend 1,0 % $TiO_2$, bezogen auf eingesetztes Pigment, gefolgt von 10 Minuten Rühren;
3. 250 ml einer Natriumsilicatlösung mit einem $SiO_2$-Gehalt von 100 g/l und einem $Na_2O$-Gehalt von etwa 30 g/l, entsprechend 0,5 % $SiO_2$, bezogen auf eingesetztes Pigment, gefolgt von 10 Minuten Rühren;
4, 695 ml der in Beispiel 1a verwendeten Natriumaluminatlösung, entsprechend 2,3 % $Al_2O_3$, bezogen auf eingesetztes Pigment; danach wurde 10 Minuten gerührt;
5. 350 ml der in Beispiel 1a verwendeten Aluminiumsulfatlösung, entsprechend 0,7 % $Al_2O_3$, bezogen auf eingesetztes Pigment.

Danach wurde die Suspension wie in den vorhergehenden Beispielen weiter aufgearbeitet.

Beispiel 3b

Beispiel 3a wurde wiederholt mit dem Unterschied, daß anstatt der Titanylsulfatlösung 285 ml der in Tabelle 1 aufgeführten Titanoxidchloridlösung A eingesetzt wurden. Wegen des höheren Säuregehaltes dieser Lösung mußte der Anteil der Natriumaluminatlösung auf 800 ml, entsprechend 2,65 % $Al_2O_3$, bezogen auf eingesetztes Pigment, angehoben und der Anteil der Aluminiumsulfatlösung auf 175 ml, entsprechend 0,35 % $Al_2O_3$, bezogen auf eingesetztes Pigment, abgesenkt werden, um am Ende der Behandlung eine neutrale Suspension zu erhalten.

Beispiel 3c

Es wurde mit den gleichen Zusätzen gearbeitet wie in Beispiel 3b mit dem einzigen Unterschied, daß die Zirkoniumorthosulfatlösung und die Titanoxidchloridlösung vor der Zugabe miteinander vermischt wurden.

Die erhaltenen Titandioxid-Pigmente wurden wie in den Beispielen 2a bis 2d getestet und die in Tabelle 4 aufgeführten Ergebnisse erhalten:

Tabelle 4

| Beispiel | 3a | 3b | 3c |
|---|---|---|---|
| verwendete Ti-Lösung[x] | TIS | TIW | TIW |
| Tage bis Kreidungsbeginn | 14 | 15 | 17 |
| Helligkeit L | 98,0 | 98,0 | 98,0 |
| Farbstich b | 1,4 | 1,5 | 1,4 |
| Fremdmetallgehalt ppm Fe | 26 | 54 | 59 |
| V | <3 | 16 | 16 |
| Cr | 1,9 | 3,0 | 3,1 |

[x] Erläuterungen siehe unter Tabelle 2

Auch aus dieser Tabelle geht hervor, daß der erhöhte Fremdmetallanteil in den erfindungsgemäß nachbehandelten Titandioxid-Pigmenten nicht zur Verschlechterung der optischen Eigenschaften führt und daß diese Titandioxid-Pigmente gegenüber einem in bekannter Weise nachbehandelten Titandioxid-Pigment eine verbesserte Witterungsbeständigkeit aufweisen. Das gilt im besonderen Maße für das in Beispiel 3c hergestellte Pigment, bei dem die Titanoxidchloridlösung vor ihrer Zugabe mit der Zirkoniumorthosulfatlösung vermischt wurde.

In den folgenden Beispielen wird ein Pigment mit verbessertem Glanz in Dispersionslackfarben beschrieben:

Beispiel 4a

15 kg eines durch Oxidation von Titantetrachlorid in der Dampfphase hergestellten Titandioxid-Pigmentes wurden in Form einer wässerigen Suspension mit einem $TiO_2$-Gehalt von 450 g/l und einem pH-Wert von 10,5 intensiv in einer Sandmühle gemahlen. Danach wurde die Suspension auf einen $TiO_2$-Gehalt von 350 g/l verdünnt, und es wurden bei 60 °C unter ständigem Rühren und Aufrechterhalten der Temperatur folgende Zusätze gemacht:

1. 750 ml einer Zirkoniumorthosulfatlösung mit einem $ZrO_2$-Gehalt von 100 g/l, entsprechend 0,5 % $ZrO_2$, bezogen auf eingesetztes Pigment; danach wurde 10 Minuten gerührt;
2. 1850 ml einer Natriumaluminatlösung mit einem $Al_2O_3$-Gehalt von 166 g/l und einem NaOH-Gehalt von etwa 250 g/l, entsprechend 2,05 % $Al_2O_3$, bezogen auf eingesetztes Pigment, gefolgt von 10 Minuten Rühren;
3. 1425 ml einer Aluminiumsulfatlösung mit einem $Al_2O_3$-Gehalt von 100 g/l und einem $H_2SO_4$-Gehalt von etwa 280 g/l, entsprechend 0,95 % $Al_2O_3$, bezogen auf eingesetztes Pigment.

Danach wurde noch 30 Minuten gerührt und der pH-Wert mit kleinen Mengen $H_2SO_4$ auf 7,7 korrigiert. Dann wurde das Titandioxid-Pigment abfiltriert, gewaschen, getrocknet und gemahlen.

Beispiel 4b

Es wurde wie in Beispiel 4a gearbeitet mit dem Unterschied, daß nach dem Zirkoniumsalzzusatz 1500 ml einer Titanylsulfatlösung mit einem $TiO_2$-Gehalt von 100 g/l und einem Gehalt an freier $H_2SO_4$ von etwa 150 g/l, entsprechend 1 % $TiO_2$, bezogen auf eingesetztes Pigment, zugesetzt wurden. Ferner wurde die Menge der Natriumaluminatlösung auf 2180 ml (entsprechend 2,4 % $Al_2O_3$) erhöht und die Menge der Aluminiumsulfatlösung auf 900 ml (entsprechend 0,6 % $Al_2O_3$) erniedrigt.

### Beispiel 4c

Beispiel 4b wurde wiederholt mit folgenden Unterschieden: Anstatt der Titanylsulfatlösung wurden 875 ml der in Tabelle 1 aufgeführten Titanoxidchloridlösung A eingesetzt. Die Menge der eingesetzten Titanoxidchloridlösung entsprach 0,8 % $TiO_2$, bezogen auf eingesetztes Pigment. Ferner wurde die Menge der Natriumaluminatlösung auf 2455 ml, entsprechend 2,7 % $Al_2O_3$, bezogen auf eingesetztes Pigment, und die Menge der Aluminiumsulfatlösung auf 450 ml, entsprechend 0,3 % $Al_2O_3$, bezogen auf eingesetztes Pigment, eingestellt, um zum Schluß eine neutrale Suspension zu erhalten.

Die Suspension wurde dann wie in Beispiel 4a weiter aufgearbeitet und das Pigment mit dem unter cc) beschriebenen Test geprüft. Die Ergebnisse sind in Tabelle 5 aufgeführt.

Tabelle 5

| Beispiel | 4a | 4b | 4c |
|---|---|---|---|
| Verwendete Ti-Lösung [x) ] | – | TIS | TIW |
| Glanz 20° (in Prozent) | 28 | 31 | 39 |
| Glanz 60° (in Prozent) | 74 | 76 | 87 |

[x) ] siehe Erläuterung unter Tabelle 2

Aus der Tabelle 5 geht hervor, daß man zwar durch den Einsatz von Titanylsulfat bereits eine geringe Verbesserung im Glanzverhalten eines Titandioxid-Pigmentes in Dispersionslackfarben erhalten kann, daß aber diese Verbesserung bei der erfindungsgemäßen Verwendung von Titanoxidchloridlösung, die durch Waschen von Chlorierungsabgasen gewonnen wurde, bedeutend höher ist.

In den folgenden Beispielen werden $TiO_2$-Pigmente mit sehr geringen Mengen an Nachbehandlungssubstanzen hergestellt, die für den Einsatz in Polyethylen, insbesondere dünnen Polyethylenfolien, geeignet sind:

### Beispiel 5a

Ein durch Oxidation von Titantetrachlorid in der Dampfphase hergestelltes in Wasser angeschlämmtes Titandioxid-Pigment wurde unter Verwendung von NaOH und Polyphosphat einer Naßmahlung unterzogen und auf einen $TiO_2$-Gehalt von 350 g/l bei einem pH-Wert von 10 eingestellt. Zu 17 Litern dieser Suspension (entsprechend 6 kg $TiO_2$) wurden bei 60 °C unter fortwährendem Rühren und Einhalten der Temperatur nacheinander folgende Zusätze gemacht:

1. 150 ml einer wie in Beispiel 1a eingesetzten Aluminiumsulfatlösung mit einem $Al_2O_3$-Gehalt von 100 g/l, entsprechend 0,25 % $Al_2O_3$, bezogen auf eingesetztes Pigment; danach wurde 10 Minuten gerührt;

2. 90 ml einer wie in Beispiel 1a eingesetzten Natriumaluminatlösung ($Al_2O_3$-Gehalt 165 g/l), entsprechend 0,25 % $Al_2O_3$, bezogen auf eingesetztes Pigment.

Die Suspension wurde anschließend 30 Minuten gerührt und wies einen neutralen pH-Wert auf. Sie wurde weiter aufgearbeitet wie in Beispiel 1a beschrieben.

### Beispiel 5b

Es wurde von der gleichen Suspension in der gleichen Menge ausgegangen wie in Beispiel 5a. Zu ihr wurden bei 60 °C unter ständigem Rühren folgende Zusätze gemacht:

1. 180 ml der in Beispiel 5a eingesetzten Natriumaluminatlösung, entsprechend 0,5 % $Al_2O_3$, bezogen auf eingesetztes Pigment; danach wurde 10 Minuten gerührt;

2. 110 ml einer durch Waschen von Chlorierungsabgasen gewonnenen Titanoxidchloridlösung mit einem $TiO_2$-Gehalt von 141 g/l und einem HCl-Gehalt von 400 g/l (Molverhältnis HCl zu $TiO_2$ = 6,2). Ihre Menge entsprach 0,26 % $TiO_2$, bezogen auf eingesetztes Pigment.

Nach der Zugabe der Titanoxidchloridlösung wies die Suspension einen neutralen pH-Wert auf. Sie wurde wie in Beispiel 1a weiter aufgearbeitet. Die erhaltenen Titandioxid-Pigmente wurden mit dem unter bb) angegebenen Test auf Helligkeit und Farbstich, mit dem unter dd) angegebenen Test auf Glanz und mit dem unter ee) angegebenen Test auf den Gehalt an Fe und V geprüft. Die Ergebnisse sind in Tabelle 6 aufgezeigt:

Tabelle 6

| Beispiel | 5a | 5b |
|---|---|---|
| Verwendete Ti-Lösung[x) | – | TIW |
| Helligkeit L | 97,59 | 97,57 |
| Farbstich b | 1,12 | 1,12 |
| Glanz (Alkydharz) 20° (in Prozent) | 76 | 79 |
| Fremdmetallgehalt ppm Fe | 24 | 37 |
| V | <3 | 5 |

[x) siehe Erläuterung unter Tabelle 2

Die Tabelle 6 zeigt, daß das erfindungsgemäß nachbehandelte Titandioxid-Pigment trotz seines erhöhten Gehaltes an Eisen und Vanadium in den optischen Eigenschaften einem bekannten Titandioxid-Pigment gleichwertig ist und im Glanzverhalten das bekannte Titandioxid-Pigment übertrifft.

Mit beiden Pigmenten konnten einwandfreie Blasfolien hergestellt werden.

Beispiel 6a

Es wurde von einem Titandioxid-Pigment ausgegangen, das durch Oxidation von Titantetrachlorid in der Dampfphase hergestellt wurde. Dieses Pigment wurde in Form einer Suspension wie in Beispiel 1a eingesetzt. In dieser Suspension, deren Menge 200 g $TiO_2$ entsprach, wurden bei 60 °C unter ständigem Rühren nacheinander folgende Zusätze gemacht:

1. 20 ml Natriumsilicatlösung mit einem $SiO_2$-Gehalt von 100 g/l und einem $Na_2O$-Gehalt von etwa 30 g/l, entsprechend 1 % $SiO_2$, bezogen auf eingesetztes Pigment, gefolgt von 10 Minuten Rühren;

2. 25 ml einer Natriumaluminatlösung mit einem $Al_2O_3$-Gehalt von 160 g/l und einem NaOH-Gehalt von etwa 250 g/l, entsprechend 2 % $Al_2O_3$, bezogen auf eingesetztes Pigment; danach wurde 10 Minuten gerührt;

3. 14,3 ml der in Tabelle 1 aufgeführten Titanoxidchloridlösung A, entsprechend einer Menge von 1 % $TiO_2$, bezogen auf eingesetztes Pigment; danach wurde 30 Minuten gerührt.

Die Suspension reagierte am Ende dieser Behandlung neutral. Das Pigment wurde abfiltriert, gewaschen, getrocknet und auf einem Laborkollergang gemahlen.

Beispiel 6b

Es wurden die gleichen Zusätze wie im Beispiel 6a, jedoch in geänderter Reihenfolge, gemacht: Titanoxidchloridlösung, gefolgt von Natriumsilicat und schließlich Natriumaluminat.

Die erhaltenen Titandioxid-Pigmente wurden mit Test bb) auf Helligkeit und Farbstich und mit Test ee) auf ihren Gehalt an Eisen, Vanadium und Chrom untersucht. Die Ergebnisse sind in Tabelle 7 aufgeführt:

Tabelle 7

| Beispiel | 6a | 6b |
|---|---|---|
| Helligkeit L | 97,80 | 97,67 |
| Farbstich b | 1,32 | 1,48 |
| Fremdmetallgehalt ppm Fe | 65 | 63 |
| V | 18 | 19 |
| Cr | 2,7 | 2,7 |

Auch in diesem Falle wurden Titandioxid-Pigmente erhalten, die trotz ihres Fremdmetallgehaltes gute optische Eigenschaften aufwiesen.

Beispiel 7

Es wurde von einem Titandioxid-Pigment ausgegangen, das durch Hydrolyse einer Titanylsulfatlösung nach dem sogenannten Sulfatprozeß hergestellt wurde und Rutilstruktur aufwies.

5 kg dieses Pigmentes wurden in Form einer Suspension mit einem $TiO_2$-Gehalt von 350 g/l und einem pH-Wert von 9,5 eingesetzt. Bei 60 °C wurden unter Rühren folgende Zusätze gemacht:

1. 400 ml einer Titanoxidchloridlösung; für diese Titanoxidchloridlösung wurde von einer Titanoxidchloridlösung ausgegangen, die durch Waschen von Chlorierungsabgasen gewonnen wurde und einen $TiO_2$-Gehalt von 170 g/l und einen HCl-Gehalt von etwa 430 g/l (Molverhältnis HCl zu $TiO_2$ = 5,5) aufwies. Diese Lösung wurde mit Wasser auf einen $TiO_2$-Gehalt von 75 g/l verdünnt. Die bei der Nachbehandlung eingesetzte Menge entsprach 0,6 % $TiO_2$, bezogen auf eingesetztes Pigment; es folgte 10 Minuten Rühren;

2. 910 ml Natriumaluminatlösung mit einem $Al_2O_3$-Gehalt von 165 g/l, entsprechend 3 % $Al_2O_3$, bezogen auf eingesetztes Pigment; danach wurde 10 Minuten gerührt;

3. weitere 450 ml der in Stufe 1 eingesetzten verdünnten Titanoxidchloridlösung, entsprechend 0,675 % $TiO_2$, bezogen auf eingesetztes Pigment.

Die erhaltene neutrale Suspension wurde noch 60 Minuten gerührt und das Pigment danach filtriert, gewaschen, getrocknet und in einer Strahlmühle gemahlen. Es wurde ein Pigment mit sehr guten Eigenschaften erhalten, das lediglich in der Helligkeit L gemäß Test bb) etwa 1 Punkt niedriger lag als ein Vergleichspigment ohne den Titanoxidchloridzusatz.

Dieses Titandioxid-Pigment kann überall dort eingesetzt werden, wo man nicht höchste Ansprüche an die Helligkeit stellen muß.

**Patentansprüche**

1. Verfahren zur Verbesserung von Titandioxid-Pigmenten durch eine Nachbehandlung, wobei die Nachbehandlung so durchgeführt wird, daß das auf beliebige Weise hergestellte Titandioxid-Pigment in wässeriger Suspension mit einer wässerigen Titanoxidchloridlösung und gegebenenfalls mit einem oder mehreren anderen bei Neutralisation schwerlösliche Oxidhydrate und/oder sonstige schwerlösliche Verbindungen bildenden wasserlöslichen Metallsalzen und/oder gegebenenfalls einem wasserlöslichen Silicat in beliebiger Reihenfolge versetzt wird und aus der Titanoxidchloridlösung und gegebenenfalls den anderen Metallsalzen und/oder dem Silicat schwerlösliche Oxidhydrate und/oder sonstige schwerlösliche Verbindungen auf das Titandioxid-Pigment niedergeschlagen werden und das so behandelte Titandioxid-Pigment aus der Suspension abgetrennt, gewaschen, getrocknet und gemahlen wird, dadurch gekennzeichnet, daß als wässerige Titanoxidchloridlösung eine Lösung mit einem Salzsäuregehalt, der einem Molverhältnis von HCl zu $TiO_2$ von 3,5 bis 10 entspricht, eingesetzt wird, die beim Waschen von Abgasen gebildet wird, die bei der Herstellung von Titantetrachlorid durch Chlorieren titanhaltiger Rohstoffe entstehen.

2. Verfahren nach Anspruch 1, dadurch gekennzeichnet, daß als Titandioxid-Pigment ein Pigment eingesetzt wird, das durch Oxidation von Titantetrachlorid in der Dampfphase hergestellt wird.

3. Verfahren nach den Ansprüchen 1 und 2, dadurch gekennzeichnet, daß die wässerige Titanoxidchloridlösung in einer Menge von 0,2 bis 2 Gewichtsprozent, vorzugsweise 0,2 bis 1 Gewichtsprozent, berechnet als $TiO_2$ und bezogen auf eingesetztes Titandioxid-Pigment, eingesetzt wird.

4. Verfahren nach den Ansprüchen 1 bis 3, dadurch gekennzeichnet, daß die wässerige Titandioxid-Pigment-Suspension außer mit der Titanoxidchloridlösung auch mit wässerigen Lösungen von Salzen des Aluminiums und/oder des Zirkoniums und/oder mit einer wässerigen Silicatlösung versetzt wird.

5. Verfahren nach den Ansprüchen 1 bis 4, dadurch gekennzeichnet, daß eine wässerige Titanoxidchloridlösung eingesetzt wird, die dadurch hergestellt wird, daß die Abgase, die bei der Herstellung von Titantetrachlorid durch Chlorieren titanhaltiger Rohstoffe entstehen, mit einer wässerigen Titanoxidchloridlösung behandelt werden, deren Konzentration, berechnet als $TiO_2$, 100 bis 170 g/l beträgt.

6. Verfahren zur Verwendung einer wässerigen Titanoxidchloridlösung mit einem Salzsäuregehalt, der einem Molverhältnis von HCl zu $TiO_2$ von 3,5 bis 10 entspricht, die beim Waschen von Abgasen gebildet wird, die bei der Herstellung von Titantetrachlorid durch Chlorieren titanhaltiger Rohstoffe entstehen, dadurch gekennzeichnet, daß die beim Waschen der Abgase gebildete Lösung ohne Entfernung der in ihr befindlichen Nichttitanmetallionen bei der Nachbehandlung von Titandioxid-Pigmenten eingesetzt wird.

7. Verfahren nach Anspruch 6, dadurch gekennzeichnet, daß die wässerige Titanoxidchloridlösung bei der Nachbehandlung von Titandioxid-Pigmenten eingesetzt wird, die durch Oxidation von Titantetrachlorid in der Dampfphase hergestellt werden.

8. Verfahren nach den Ansprüchen 6 und 7, dadurch gekennzeichnet, daß eine wässerige Titanoxidchloridlösung eingesetzt wird, die dadurch hergestellt wird, daß die Abgase, die bei der Herstellung von Titantetrachlorid durch Chlorieren titanhaltiger Rohstoffe entstehen, mit einer wässerigen Titanoxidchloridlösung behandelt werden, deren Konzentration, berechnet als $TiO_2$, 100 bis 170 g/l beträgt.

9. Verfahren zur Herstellung eines verbesserten Titandioxid-Pigmentes aus einem titanhaltigen Rohstoff, bestehend aus einer Kombination folgender Stufen:

a) Chlorieren des titanhaltigen Rohstoffes in Anwesenheit eines Reduktionsmittels unter Bildung eines Metallchloride enthaltenden Reaktionsgemisches,

b) Abschneiden der Metallchloride aus dem Reaktionsgemisch und Abtrennen und Reinigen des Titantetrachlorids von den übrigen Metallchloriden, wobei Abgase entstehen,

c) Umsetzen des gereinigten Titantetrachlorids im Dampfzustand bei erhöhter Temperatur mit Sauerstoff unter Bildung von Titandioxid-Pigment und Chlor,

d) Abtrennen des Titandioxid-Pigmentes von den chlorhaltigen Gasen,

e) Zurückführen der chlorhaltigen Gase, gegebenenfalls nach einer geeigneten Aufarbeitung, in die Stufe a),

f) Nachbehandeln des Titandioxid-Pigmentes, wobei es in wässeriger Suspension mit einem oder mehreren wasserlöslichen Metallsalzen, die bei Neutralisation schwerlösliche Oxidhydrate und/oder sonstige schwerlösliche Verbindungen bilden, und gegebenenfalls einem wasserlöslichen Silicat versetzt wird und aus diesem Metallsalz bzw. diesen Metallsalzen und gegebenenfalls dem Silicat schwerlösliche Oxidhydrate und/oder sonstige schwerlösliche Verbindungen auf das Titandioxid-Pigment niedergeschlagen werden und das so behandelte Titandioxid-Pigment aus der Suspension abtrennt, gewaschen, getrocknet und gemahlen wird,

g) Waschen der in Stufe b) erhaltenen Abgase unter Bildung einer wässerigen Titanoxidchloridlösung mit einem Salzsäuregehalt, der einem Molverhältnis von HCl zu $TiO_2$ von 3,5 bis 10 entspricht, und

h) Einsetzen dieser Titanoxidchloridlösung ohne Abtrennung der aus den Abgasen mit ausgewaschenen weiteren Metallsalze bei der Nachbehandlung des Titandioxid-Pigmentes in Stufe f).

**Claims**

1. Process for improvement of titanium dioxide pigments by a post-treatment, wherein the titanium dioxide pigment produced by whatever process, in an aqueous suspension and in an optional order, is treated with an aqueous titanium oxide chloride solution and if necessary with one or more other water-soluble metal salts which when neutralized form difficult-to-dissolve oxid hydrates an/or other difficult-to-dissovle compounds, and/or if necessary with a water-soluble silicate, and wherein difficult-to-dissolve oxide hydrates and/or other difficult-to-dissolve compounds are precipitated onto the titanium dioxide pigment from the titanium oxide chloride solution and if necessary from the other metal salts an/or the silicate, and wherein the titanium dioxide pigment thus treated is separated from the suspension, washed, dried and milled, the process being characterized in that the aqueous titanium oxide chloride solution used has a hydrochloric acid content corresponding to a mol ratio of HCl to $TiO_2$ of 3.5 up to 10, the solution being obtained in the scrubbing of off-gases developed in the production of titanium tetrachloride by chlorination of titaniferous raw material.

2. Process according to claim 1, characterized in that the titanium dioxide pigment used is produced by the oxidation of titanium tetrachloride in the vapour phase.

3. Process according to claim 1 and 2, characterized in that the aqueous titanium oxide chloride solution is used in a quantity between 0.2 and 2 per cent by weight, preferably between 0.2 and 1 per cent by weight, calculated as $TiO_2$ and related to the $TiO_2$ pigment used.

4. Process according to claim 1 to 3, characterized in that the aqueous titanium dioxide pigment suspension is not only treated with titanium oxide chloride solution but also with aqueous solutions of salts of aluminium and/or zirconium and/or with an aqueous silicate solution.

5. Process according to claims 1 to 4, characterized in that an aqueous titanium oxide chloride solution is used which is produced by treating the off-gases generated by the chlorination of titaniferous raw materials in the production of titanium tetrachloride with an aqueous titanium oxide chloride solution of a concentration between 100 and 170 g/l calculated as $TiO_2$.

6. Process for the use of an aqueous titanium oxide chloride solution with a hydrochloric acid content corresponding to a mol ratio of HCl to $TiO_2$ of 3.5 to 10, which titanium oxide chloride solution is formed in the scrubbing of off-gases resulting from the chlorination of titaniferous raw materials in the production of titanium tetrachloride, characterized in that the solution obtained in off-gas scrubbing is used for the post-treatment of titanium dioxide pigments without prior removal of non-titanium metal ions from the titanium oxide chloride solution.

7. Process according to claim 6, characterized in that the aqueous titanium oxide chloride solution is used for the post-treatment of titanium dioxide pigments that are produced by the oxidation of titanium tetrachloride in the vapour phase.

8. Process according to claim 6 and 7, characterized in that an aqueous titanium oxide chloride solution is used which is produced by treating the off-gases generated by the chlorination of titaniferous raw materials in the production of titanium tetrachloride with an aqueous titanium oxide chloride solution of a concentration between 100 and 170g/l calculated as $TiO_2$.

9. Process for the production of an improved titanium dioxide pigment from a titaniferous raw material consisting of following steps:

a) Chlorination of the titaniferous raw material in the presence of a reducing agent, a reaction mixture being formed which contains metal chlorides;

b) Separation of the metal chlorides from the reaction mixture and separation and purification of the titanium tetrachloride from the remaining metal chlorides, generating off-gases;

c) Reaction of the purified titanium tetrachloride with oxygen in the vapour phase at elevated temperature, producing titanium dioxide pigment and chlorine;

d) Separation of the titanium dioxide pigment from the chlorine-containig gases;

e) Recycling of the chlorine-containing gases to step a) if necessary after a suitable treatment;

f) Post-treatment of the titanium dioxide pigment, wherein the pigment in an aqueous suspension is treated with one or more water-soluble metal salts which when neutralized form difficult-to-dissolve oxide hydrates and/or other difficult-to-dissolve compounds, and if necessary with a water-soluble silicate, and wherein the difficult-to-dissolve oxide hydrates and/or other difficult-to-dissolve compounds are precipitated onto the titanium dioxide pigment from this metal salt or these metal salts and if necessary from the silicate, and wherein the titanium dioxide pigment thus treated is separated from the suspension, washed, dried and milled;

g) Scrubbing of the off-gases obtained in steb b), forming an aqueous titanium oxide chloride solution with a hydrochloric acid content that corresponds to a mol ratio of HCl to $TiO_2$ of 3.5 up to 10; and

h) Use of this titanium oxide chloride solution for the post-treatment of the titanium dioxide pigment in step f) without prior separation of the other metal salts scrubbed out from the off-gases.

**Revendications**

1. Procédé pour améliorer des pigments de dioxyde de titane par un post-traitement, le post-traitement étant mis en œuvre de telle sorte que le pigment de dioxyde de titane, préparé d'une manière quelconque, est, en suspension aqueuse, additionné dans un ordre quelconque d'une solution aqueuse d'oxychlorure de titane et éventuellement d'un ou plusieurs autres sels métalliques solubles dans l'eau, formant lors de la neutralisation des oxydes hydratés difficilement solubles et/ou d'autres composés difficilement solubles et/ou éventuellement d'un silicate soluble dans l'eau, et que, à partir de la solution d'oxychlorure de titane et éventuellement des autres sels métalliques et/ou du silicate, on dépose sur le pigment de dioxyde de titane des oxydes hydratés difficilement solubles et/ou d'autres composés difficilement solubles, et le pigment de dioxyde de titane ainsi traité est séparé de la suspension, lavé, séché et broyé, caractérisé en ce qu'on utilise en tant que solution aqueuse d'oxychlorure de titane une solution ayant une teneur en acide chlorhydrique correspondant à un rapport en moles du HCl au $TiO_2$ allant de 3,5 à 10, teneur qui se forme lors du lavage des gaz d'évacuation qui se dégagent lors de la production de tétrachlorure de titane par chloration de matières premières contenant du titane.

2. Procédé selon la revendication 1, caractérisé en ce qu'on utilise comme pigment de dioxyde de titane un pigment qui est préparé par oxydation de tétrachlorure de titane en phase vapeur.

3. Procédé selon les revendications 1 et 2, caractérisé en ce que la solution aqueuse d'oxychlorure de titane est utilisée en une quantité de 0,2 à 2% en poids, de préférence de 0,2 à 1% en poids, calculée en $TiO_2$ et par rapport au pigment de dioxyde de titane utilisé.

4. Procédé selon les revendications 1 à 3, caractérisé en ce que la suspension aqueuse de pigment de dioxyde de titane est additionnée non seulement de la solution d'oxychlorure de titane, mais aussi de solutions aqueuses de sels d'aluminium et/ou de zirconium et/ou d'une solution aqueuse de silicates.

5. Procédé selon les revendications 1 à 4, caractérisé en ce qu'on utilise une solution aqueuse d'oxychlorure de titane, que l'on prépare en traitant les gaz d'évacuation, qui se forment lors de la préparation du tétrachlorure de titane, par chloration de matières premières contenant du titane, avec une solution aqueuse d'oxychlorure de titane dont la concentration, calculée en $TiO_2$, est de 100 à 170 g/l.

6. Procédé pour l'utilisation d'une solution aqueuse d'oxychlorure de titane ayant une teneur en acide chlorhydrique correspondant à un rapport en moles du HCl au $TiO_2$ allant de 3,5 à 10, teneur qui s'est formée lors du lavage des gaz d'évacuation, qui se forment lors de la préparation du tétrachlorure de titane par chloration de matières premières contenant du titane, caractérisé en ce que la solution qui s'est formée lors du lavage des gaz d'évacuation est utilisée, lors du post-traitement des pigments de dioxyde de titane, sans élimination des ions métalliques autres que le titane qui s'y trouvent.

7. Procédé selon la revendication 6, caractérisé en ce que la solution aqueuse d'oxychlorure de titane est utilisée lors du post-traitement de pigments de dioxyde de titane qui sont préparés par oxydation du tétrachlorure de titane en phase vapeur.

8. Procédé selon les revendications 6 et 7, caractérisé en ce qu'on utilise une solution aqueuse d'oxychlorure de titane que l'on prépare en traitant les gaz d'évacuation, qui se forment lors de la préparation du tétrachlorure de titane par chloration de matières premières contenant du titane, avec une solution aqueuse d'oxychlorure de titane dont la concentration, calculée en $TiO_2$, est de 100 à 170 g/l.

9. Procédé pour la préparation d'une pigment amélioré de dioxyde de titane à partir d'une matière première contenant du titane, consistant en une combinaison des étapes suivantes:

a) Chloration de la matière première contenant du titane en présence d'un réducteur avec formation d'un mélange réactionnel contenant des chlorures métalliques,

b) Séparation des chlorures métalliques d'avec le mélange réactionnel et séparation et purification du tétrachlorure de titane d'avec les chlorures métalliques, restants ce qui crée des gaz d'évacuation,

c) Réaction du tétrachlorure de titane purifié, à l'état vapeur et à haute température, avec de l'oxygène, avec formation de pigments de dioxyde de titane et de chlore,

d) Séparation du pigment de dioxyde de titane d'avec les gaz chlorés,

e) Renvoi des gaz chlorés, éventuellement après un traitement approprié, dans l'étape a),

f) Post-traitement du pigment de dioxyde de titane, où il est additionné en solution aqueuse d'un ou plusieurs sels métalliques solubles dans l'eau, qui, lors de la neutralisation, forment des oxydes hydratés difficilement solubles et/ou d'autres composés difficilement solubles, et éventuellement d'un silicate soluble dans l'eau, et, à partir de ce sel métallique ou de ces sels métalliques et éventuellement du silicate, on dépose par précipitation, sur le pigment de dioxyde de titane, des oxydes hydratés difficilement solubles et/ou d'autres composés difficilement solubles, et le pigment de dioxyde de titane ainsi traité est séparé de la suspension, lavé, séché et boyé,

g) Lavage des gaz d'évacuation obtenus dans l'étape b) avec formation d'une solution aqueuse d'oxychlorure de titane ayant une teneur en acide chlorhydrique correspondant à un rapport en moles du HCl au TiO$_2$ allant de 3,5 à 10, et

h) Utilisation de cette solution d'oxychlorure de titane, sans séparation des autres sels métalliques entraînés des gaz d'évacuation par lavage, lors du post-traitement du pigment de dioxyde de titane de l'étape f).